# DEMANDE DE BREVET EUROPEEN

(11) **EP 3 032 115 A1**
(43) Date de publication de la demande: **15.06.2016**
(21) Numéro de dépôt: 15199463.9
(22) Date de dépôt: 11.12.2015
(51) Int. Cl.: F16B 5/06, F16B 17/00, B21D 39/03, F16B 21/06

(54) **ENCEINTE**

(30) Priorité: 11.12.2014 FR 1462232
(71) Demandeur: CERES, 51260 La Chapelle Lasson (FR)
(72) Inventeur: LALLOUET, Laurent, 14600 EQUEMAUVILLE (FR)
(74) Mandataire: Giraud-Gasnier, Leslie

(57) **Abrégé**

L'invention concerne une enceinte comprenant une première tôle (1) comportant une mortaise, et une seconde tôle (5) comportant un tenon adapté à traverser la mortaise de façon à maintenir les deux tôles perpendiculaires l'une à l'autre.

Selon l'invention, le tenon présente une échancrure qui est adjacente à une surface extérieure (4) de la première tôle (1) quand le tenon traverse la mortaise, l'enceinte comprenant un coin de serrage séparable des deux tôles (1, 5) et adapté à être disposé dans l'échancrure de façon à serrer les deux tôles (1, 5) bord à bord du côté de l'intérieur de l'enceinte.

## Description

L'invention concerne un assemblage bord à bord de deux tôles perpendiculaires l'une à l'autre permettant de former une enceinte métallique, notamment une enceinte d'un convoyeur à grains.

On connait des enceintes métalliques de convoyeurs à grains dans lesquels les tôles formant l'enceinte sont préalablement pliées de façon à présenter un rebord saillant vers l'extérieur, et sont reliées les unes aux autres par des boulons agencés sur les rebords saillants.

Cet agencement particulier présente l'inconvénient d'offrir des zones de rétention du grain qui est transporté par un organe de déplacement disposé dans l'enceinte. Le grain situé dans ces zones de rétention peut rester en place, germer et pourrir. Il peut également être entraîné a postériori par l'organe de déplacement vers une zone de stockage de grains sains et contaminer ces derniers du fait de sa germination ou de son pourrissement. Ces zones de rétention ont également l'inconvénient de retenir la poussière circulant dans l'enceinte et d'être des sources de contamination.

La présente invention vise à résoudre ce problème de présence de zones de rétention internes réalisées par l'accolement de tôles pliées vers l'extérieur.

Selon l'invention, l'enceinte comprend une première tôle comportant une mortaise, et une seconde tôle comportant un tenon adapté à traverser la mortaise de façon à maintenir les deux tôles perpendiculaires l'une à l'autre, le tenon présente une échancrure qui est adjacente à une surface extérieure de la première tôle quand le tenon traverse la mortaise, et l'enceinte comprend un coin de serrage séparable des deux tôles et adapté à être disposé dans l'échancrure de façon à serrer les deux tôles bord à bord du côté de l'intérieur de l'enceinte.

De ce fait, quand le coin de serrage est disposé dans l'échancrure, les deux tôles sont serrées bord à bord, ce qui supprime les zones de rétention de grains au niveau de leur serrage. De plus, vu qu'il n'est plus nécessaire de plier les tôles, l'opération de pliage est supprimée, et les tôles utilisées peuvent être réalisées en des matériaux qui ont une dureté élevée (par exemple, comprise entre 400 et 500 HB) pouvant rendre le pliage difficile (voire impossible), et qui sont préalablement galvanisés (ce qui permet de supprimer une étape de galvanisation à chaud). En outre, la transmission des efforts tranchant entre les tôles est maintenant réalisée par les tôles et non plus par les boulons (qui sont supprimés).

Selon un premier mode de réalisation, le coin de serrage comprend, d'une part, une surface d'appui avant adaptée à prendre appui sur la surface extérieure de la première tôle, et, d'autre part, une surface d'appui arrière inclinée par rapport à la surface d'appui avant et adaptée à prendre appui sur une paroi délimitant l'échancrure, de sorte que, plus le coin de serrage est introduit dans l'échancrure, plus les deux tôles sont jointes serrées.

De ce fait, plus le coin de serrage est introduit dans l'échancrure, plus les deux tôles sont jointes serrées, et plus la qualité de l'étanchéité entre l'intérieur et l'extérieur de l'enceinte est élevée.

Selon un second mode de réalisation (pouvant se cumuler ou non avec le premier mode de réalisation), le coin de serrage fait partie d'une pièce de coincement ayant une forme extérieure.

Selon une première variante du second mode de réalisation, la forme extérieure de la pièce de coincement est configurée de façon à être disposée bord à bord avec la surface extérieure de la première tôle quand le coin de serrage est disposé dans l'échancrure.

De ce fait, il n'y a pas de zones de rétention à l'extérieur de l'enceinte, ce qui permet de supprimer les accumulations de poussière, de terre, d'eau, etc. qui favorisent l'apparition de végétaux et de points de rouille.

Selon une seconde variante du second mode de réalisation (pouvant se cumuler ou non avec la première variante), la forme extérieure de la pièce de coincement est configurée de façon à recouvrir au moins une surface du tenon quand le coin de serrage est disposé dans l'échancrure.

De ce fait, la poussière qui pourrait passer au travers d'un éventuel jeu entre le tenon et la mortaise, pourrait sortir hors de l'enceinte sans permettre l'introduction dans l'enceinte de divers éléments, la pièce de coincement formant une protection mécanique interdisant l'accès à l'éventuel jeu depuis l'extérieur.

Selon une troisième variante du second mode de réalisation (pouvant se cumuler ou non avec les deux première variantes), la forme extérieure de la pièce de coincement est configurée de façon à recouvrir le champ du tenon quand le coin de serrage est disposé dans l'échancrure.

De ce fait, il est ainsi possible de cacher le champ qui est généralement non galvanisé et qui a tendance à s'oxyder dans le temps, la galvanisation étant faite avant la découpe du tenon.

Selon un troisième mode de réalisation (pouvant se cumuler ou non avec les premier et second modes de réalisation), l'enceinte comprend une vis qui est adaptée, quand le coin de serrage est disposé dans l'échancrure, à traverser l'une des deux tôles et à pénétrer dans un logement solidaire du coin de serrage de façon à immobiliser ce dernier aux deux tôles.

De ce fait, la vis permet, d'une part de mettre en place le coin de serrage sans effort par un simple vissage, et, d'autre part, une fois le coin de serrage en place, d'éviter le retrait de ce dernier de l'échancrure.

Selon une première variante du troisième mode de réalisation, la vis est une vis auto-formeuse qui, lors de son vissage, est adaptée à réaliser un taraudage dans le logement et à empêcher le retrait du coin de serrage de l'échancrure.

De ce fait, la vis auto-formeuse permet d'éviter le retrait du coin de serrage de l'échancrure notamment du fait des vibrations dues par le mouvement de l'organe de déplacement des grains contenu dans l'enceinte.

Selon une seconde variante du troisième mode de réalisation (pouvant se cumuler ou non avec la première variante), la vis est adaptée à traverser le tenon et à être introduite dans le logement par une ouverture principale réalisée dans une pièce de coincement qui porte le coin de serrage.

Selon une troisième variante du troisième mode de réalisation (alternative à la seconde variante), la vis est adaptée à être introduite dans le logement après avoir traversé un perçage réalisé dans la première tôle.

Selon un quatrième mode de réalisation (pouvant se cumuler ou non avec les trois premiers modes de réalisation), l'enceinte est celle d'un convoyeur à grain.

D'autres particularités et avantage de la présente invention apparaitront dans les deux modes de réalisation donnés à titre d'exemples non limitatifs et illustrés par les dessins annexés dans lesquels :
La figure 1 représente en vue de face une première tôle utilisée pour la réalisation d'une enceinte métallique conforme à un premier mode de réalisation de l'invention, la première tôle comportant une mortaise ;
La figure 2 représente en vue de face une seconde tôle utilisée pour la réalisation d'une enceinte métallique conforme à un premier mode de réalisation de l'invention, la seconde tôle comprenant un tenon ;
La figure 3 représente en perspective une pièce de coincement utilisée pour réunir la première tôle de la figure 1 à la seconde tôle de la figure 2 ;
La figure 4 représente en perspective une vis auto-formeuse utilisée pour fixer la pièce de coincement de la figure 3 aux deux tôles des figures 1 et 2 ;
La figure 5 est une vue en coupe de l'assemblage réalisé par les deux tôles des figures 1 et 2, de la pièce de coincement de la figure 3 et de la vis auto-formeuse de la figure 4 ;
La figure 6 représente en perspective une vue prise de l'extérieur de l'enceinte métallique et illustrant l'assemblage de la figure 5, la pièce de coincement étant représentée de façon transparente ;
La figure 7 est similaire à la figure 6, la pièce de coincement étant représentée de façon pleine ;
La figure 8 est similaire à la figure 1, la première tôle étant utilisée pour la réalisation d'une enceinte métallique conforme à un second mode de réalisation de l'invention ;
La figure 9 est similaire à la figure 2, la seconde tôle étant utilisée pour la réalisation d'une enceinte métallique conforme à un second mode de réalisation de l'invention ;
La figure 10 est similaire à la figure 5, l'assemblage étant réalisé par les deux tôles des figures 8 et 9, d'une pièce de coincement conforme au second mode de réalisation de l'invention, et de la vis auto-formeuse de la figure 4 ;
La figure 11 est similaire à la figure 7, l'assemblage étant conforme au second mode de réalisation de l'invention.

Un convoyeur à grain comprend une enceinte (ici, métallique) et un organe de déplacement des grains (ici, une chaîne de manutention sans fin) disposé dans l'enceinte.

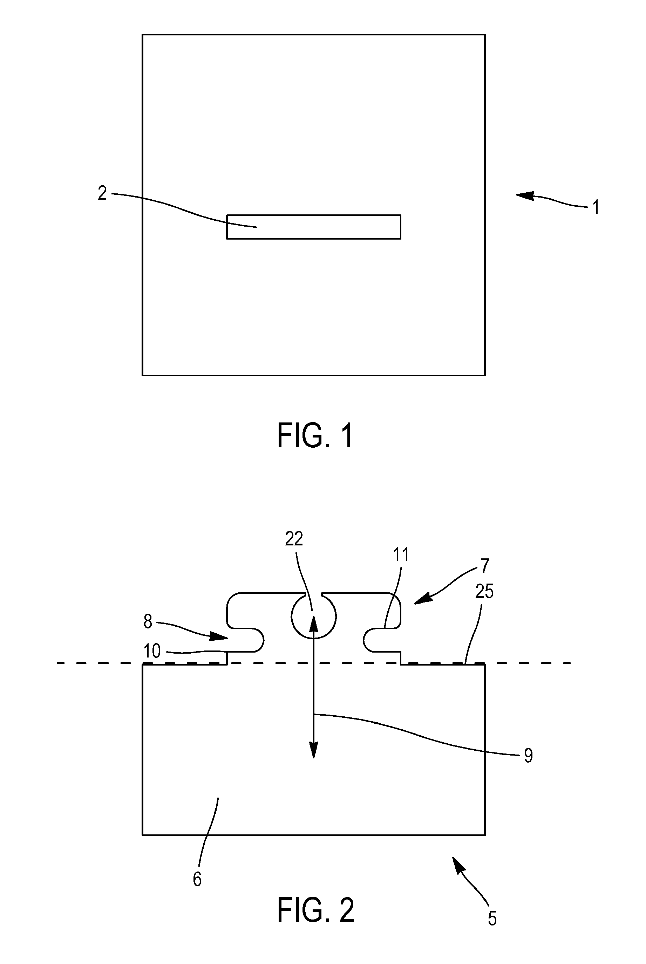

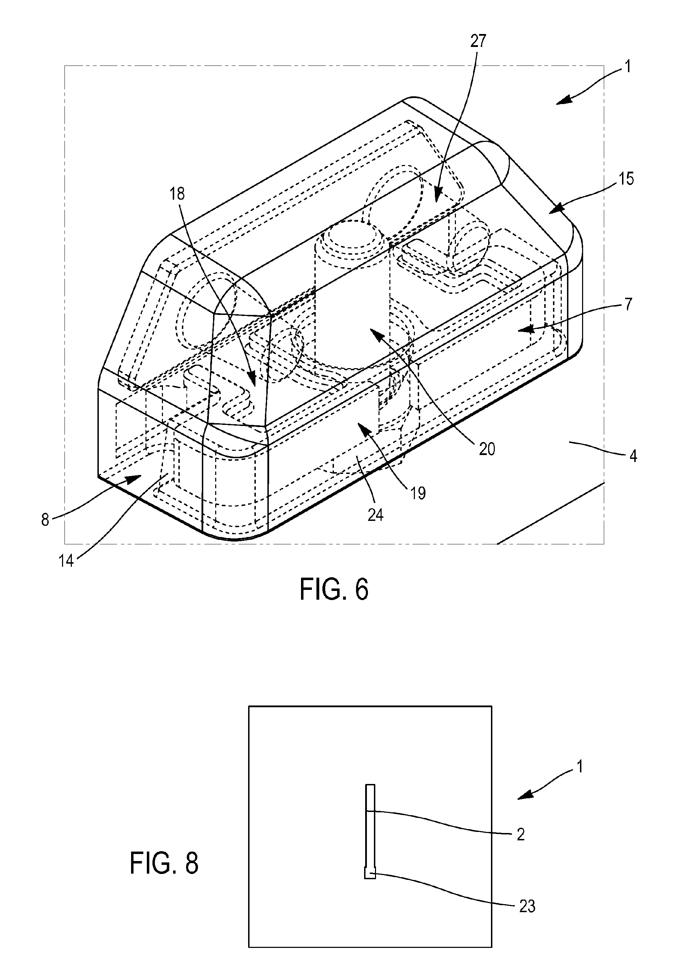

L'enceinte comprend une première tôle 1 dans laquelle est réalisée une mortaise 2, comme illustré aux figures 1 et 8. La première tôle 1 comprend deux surfaces opposées 3, 4. Comme la première tôle 1 est ici destinée à former une frontière entre l'intérieur de l'enceinte et l'extérieur, les deux surfaces opposées comprennent une surface intérieure 3 qui est destinée à être disposée du côté intérieur de l'enceinte, et une surface extérieur 4 qui est destinée à être disposée du côté extérieur. Dans les présents modes de réalisation, la première tôle 1 est plane.

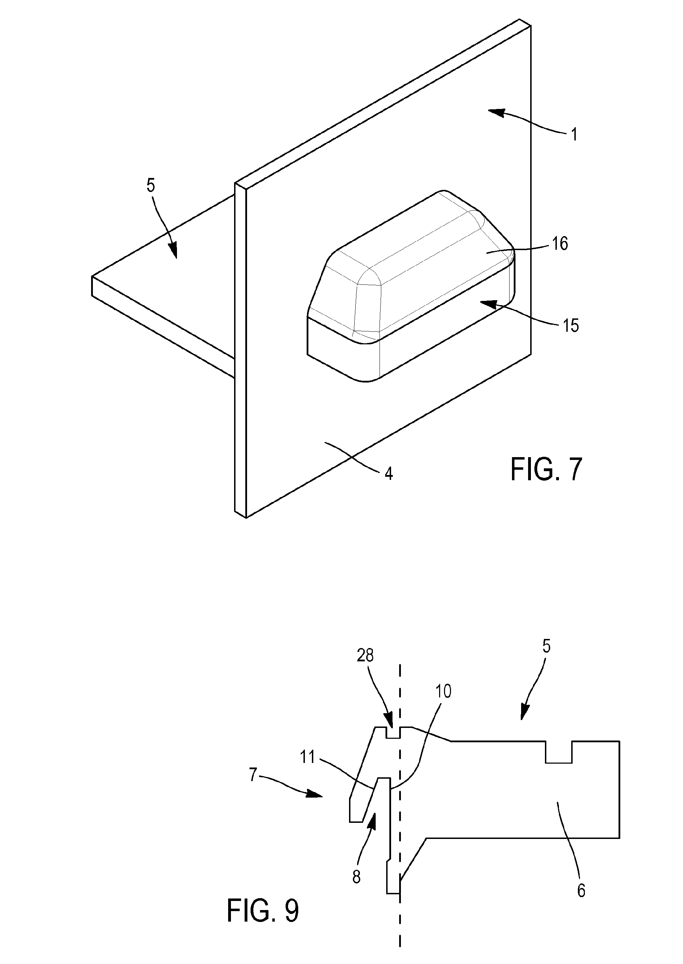

L'enceinte comprend une seconde tôle 5 qui comprend un corps 6 et un tenon 7 qui prolonge le corps 6 selon une direction longitudinale de la seconde tôle 5, comme illustré aux figures 2 et 9 où est également représentée, en tiret, une frontière séparant le corps 6 et le tenon 7.

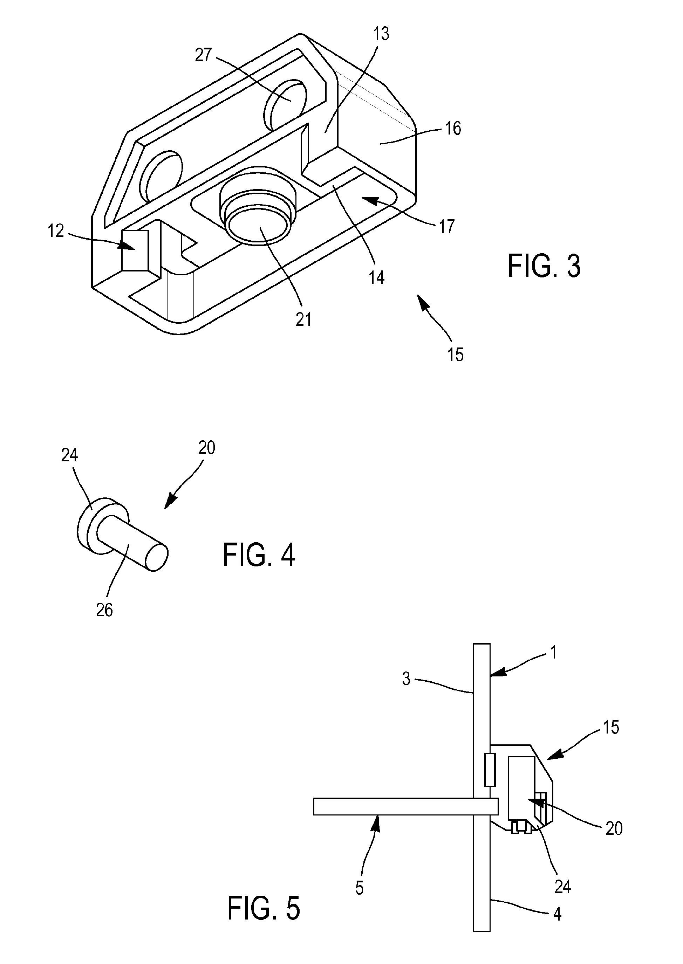

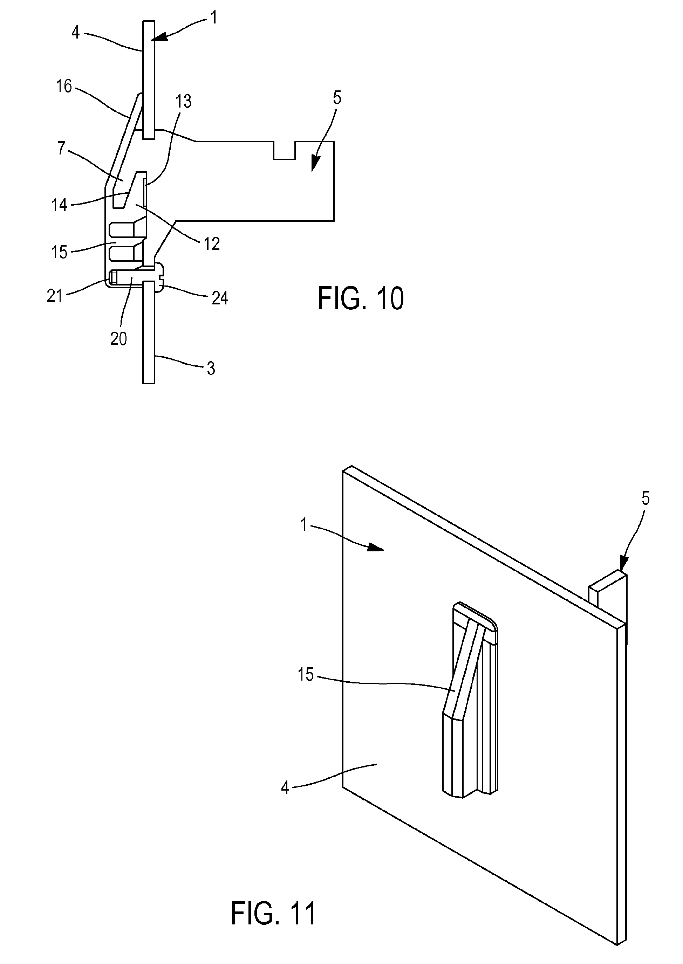

Dans les présents modes de réalisation, comme illustré aux figures 5 et 10, le tenon 7 est adapté à être introduit dans la mortaise 2 selon la direction longitudinale, à traverser la mortaise 2 et à faire saillie à l'extérieur de l'enceinte. De ce fait, les deux tôles 1, 5 sont maintenues fixes l'une à l'autre. Ici, les deux tôles 1, 5 sont maintenues perpendiculaires l'une par rapport à l'autre.

La seconde tôle 5 comprend deux surfaces opposées. De ce fait, le corps 6 et le tenon 7 comprennent chacun deux surfaces opposées qui correspondent aux deux surfaces opposées de la seconde tôle 5. Dans le premier mode de réalisation, comme illustré aux figures 5 et 7, le corps 6 de la seconde tôle 5 est destiné à former une frontière entre l'intérieur et l'extérieur de l'enceinte. Dans le second mode de réalisation, comme illustré aux figures 10 et 11, le corps 6 de la seconde tôle 5 est destiné à être disposé dans l'enceinte.

Dans les présents modes de réalisation, la seconde tôle 5 est plane.

Conformément à la présente invention, le tenon 7 présente une échancrure 8. L'échancrure 8 est adaptée à être disposée de façon adjacente à la surface extérieure 4 de la première tôle 1 quand le tenon 7 est disposé dans la mortaise 2, comme illustré aux figures 6 et 10. Dans les présents modes de réalisation, l'échancrure 8 traverse le tenon 7 sur toute son épaisseur. Dans le premier mode de réalisation, comme illustré à la figure 2, le tenon 7 comprend deux échancrures 8 disposées symétriquement par rapport à un axe médian longitudinal 9 du tenon 7. Dans le second mode de réalisation, comme illustré à la figure 9, le tenon 7 ne comprend qu'une échancrure 8.

Chaque échancrure 8 est délimitée par deux parois 10, 11 opposées : une paroi avant 10 qui est portée par une première partie du tenon 7 formant la liaison entre le corps 6 et l'échancrure 8, et une paroi arrière 11 qui est portée par une seconde partie du tenon 7 disposée à l'opposé de la première partie et formant la partie libre du tenon 7.

L'enceinte comprend également au moins un coin de serrage 12 qui est séparable des deux tôles 1, 5. Le coin de serrage 12 est adapté à être logé dans une échancrure 8 de façon à serrer les deux tôles 1, 5 bord à bord à l'intérieur de l'enceinte. Plus le coin de serrage 12 est enfoncé dans l'échancrure 8 qui est disposée à l'extérieur de l'enceinte, plus le tenon 7 est tiré hors de la mortaise 2, et plus les deux tôles 1, 5 sont serrées bord à bord à l'intérieur de l'enceinte.

Ainsi, la réalisation de la fixation bord à bord en équerre des deux tôles 1, 5 selon l'invention permet de supprimer les zones de rétention de grain dans l'enceinte. Par ailleurs, vu qu'il n'est plus nécessaire de plier les tôles, l'opération de pliage est supprimée. Etant donné qu'il n'est plus nécessaire de plier les tôles 1, 5, celles-ci peuvent être réalisées en des matériaux ayant une dureté élevée (par exemple une dureté comprise entre 400 et 500 HB). La dureté peut atteindre des niveaux rendant le pliage des tôles 1, 5 difficile, voire impossible. Il est ainsi possible d'utiliser des tôles 1, 5 en des matériaux jusqu'alors inutilisé, tels que des aciers inoxydables ou des aciers hautes résistances. En outre, la transmission des efforts tranchant est maintenant réalisée par les tôles 1, 5 elles-mêmes, et non plus par les boulons qui sont maintenant supprimés. Enfin, l'usage des coins de serrage 12 permet d'utiliser directement des tôles 1, 2 en matériau galvanisé, ce qui dispense ainsi de galvaniser ces dernières à chaud.

Chaque coin de serrage 12 comprend deux surfaces d'appui 13, 14 opposées : une surface d'appui avant 13 qui est adaptée à prendre appui sur la surface extérieure 4 de la première tôle 1, et une surface d'appui arrière 14 qui est inclinée par rapport à la surface d'appui avant 13 et qui est adaptée à prendre appui sur la paroi arrière 11 qui délimite l'échancrure 8. La configuration des deux surfaces d'appui 13, 14 fait que plus le coin de serrage 12 est introduit dans l'échancrure 8, plus les deux tôles 1, 5 sont jointes serrées.

Chaque coin de serrage 12 fait partie d'une pièce de coincement 15 qui présente, d'une part, une forme extérieure définie par des parois extérieures 16 et, d'autre part, une ouverture principale 17 délimitée par les parois extérieure 16 et permettant l'introduction du tenon 7 dans la pièce de coincement 15.

Dans les présents modes de réalisation, l'ensemble des coins de serrage 12 associés à un tenon 7 fait partie d'une pièce de coincement 15 unique. Ainsi, dans le premier mode de réalisation, la pièce de coincement 15 comprend deux coins de serrage 12, et dans le deuxième mode de réalisation, la pièce de coincement 15 ne comprend qu'un seul coin de serrage 12.

La forme extérieure de la pièce de coincement 15 est configurée de façon à être disposée bord à bord avec la surface extérieure 4 de la première tôle 1. De ce fait, il n'y a pas de zones de rétention externes, ce qui permet de supprimer les accumulations de poussière, de terre, d'eau, etc. qui favorisent l'apparition de végétaux et de points de rouille.

La forme extérieure de la pièce de coincement 15 est également configurée pour recouvrir au moins une des deux surfaces opposées du tenon 7 quand le coin de serrage 12 est disposé dans l'échancrure 8. Dans le premier mode de réalisation, la forme extérieure de la pièce de coincement 15 recouvre uniquement la surface supérieure 18 du tenon 7, la surface inférieure du tenon 7 étant accessible depuis l'extérieur par l'ouverture principale 17 qui, dans ce mode de réalisation, est délimitée par les parois extérieures 16 et par les coins de serrage 12. Dans le second mode de réalisation, la forme extérieure de la pièce de coincement 15 recouvre les deux faces latérales du tenon 7, l'ouverture principale 17 étant adaptée à venir contre la surface extérieure 4 de la première tôle 1.

La forme extérieure de la pièce de coincement 15 est également configurée pour recouvrir un champ 19 du tenon 7 quand le coin de serrage 12 est disposé dans l'échancrure 8. Il est ainsi possible de cacher le champ 19 qui a tendance à s'oxyder dans le temps, la galvanisation des tôles 1, 5 étant généralement réalisée avant la découpe du tenon 7 et de la mortaise 2.

La forme extérieure de la pièce de coincement 15 empêche aussi un accès direct depuis l'extérieur à un éventuel jeu entre le tenon 7 et la mortaise 2. Ainsi, de la poussière venant de l'intérieur de l'enceinte peut passer par l'éventuel jeu et sortir de l'enceinte, mais la poussière se trouvant à l'extérieur de l'enceinte ne peut y pénétrer.

De préférence, chaque échancrure 8 débouche dans le champ 19 du tenon 7 ce qui permet de découper d'une façon rapide, économique et sans discontinuité, par des moyens de découpe du type laser ou plasma, la forme du tenon 7 et de chaque échancrure 8.

Ainsi, par sa configuration extérieure, la pièce de coincement 15 recouvre le tenon 7, empêche que des personnes ne s'y blesse, et améliore le design de l'enceinte (et ici, du convoyeur à grain).

L'enceinte comprend également une vis 20 qui est adaptée à fixer le coin de serrage 12 aux deux tôles 1, 5.

De façon plus précise, la vis 20 est adaptée à traverser l'une des deux tôles 1, 5 et à pénétrer dans un logement 21 qui est solidaire du coin de serrage 12.

D'une façon générale, après avoir introduit le tenon 7 dans la mortaise 2 et, ensuite, avoir disposé la pièce de coincement 15 de sorte que chaque coin de serrage 12 soit logé dans une échancrure 8, la vis 20 est disposée de façon à traverser l'une des deux tôles 1, 5 au niveau d'un perçage 22, 23 réalisé dans cette tôle 1, 5, et à pénétrer dans le logement 21 qui est situé dans le prolongement du perçage 22 ,23. La vis 20 comprend une tête 24 dont le diamètre est supérieur au diamètre du perçage 22, 23 de façon à limiter l'introduction de la vis 20 dans le logement 21 et à plaquer la tôle 1, 5 portant le perçage 22, 23 à la pièce de coincement 15.

La vis 20 permet, par son vissage, une mise en place du coin de serrage 12 sans effort. Elle permet également d'immobiliser la pièce de coincement 15 par rapport aux deux tôles 1, 5 et d'éviter le retrait de chaque coin de serrage 12 de l'échancrure 8 correspondante.

Dans les présents modes de réalisation, la vis 20 est une vis auto-formeuse 20 qui, lors de son vissage, réalise un taraudage dans le logement 21. La vis auto-formeuse 20 permet de plaquer la pièce de coincement 15 sans avoir à la frapper. Elle permet également d'éviter tout desserrage possible, notamment du fait des vibrations générées par l'organe de déplacement des grains.

La géométrie de la pièce de coincement 15 permet qu'elle ait un bon appui la surface du tenon 7 qui est à l'opposé de l'ouverture principale 17. De plus, le logement 21 a, préalablement à la réalisation du taraudage par la vis auto-formeuse 20, une forme légèrement conique permettant une évacuation des copeaux réalisés pendant le vissage. De ce fait, l'absence de copeaux permet de ne pas limiter la course de serrage de la pièce de coincement 15, et de ne pas réduire l'efficacité de l'assemblage.

Dans le premier mode de réalisation, le perçage 22 est réalisé dans le tenon 7 de la deuxième tôle 5. Toujours dans le but de faciliter la réalisation du tenon 7, le rayon du perçage 22 est légèrement plus important que la distance séparant le centre du perçage 22 du bord de tenon 7. Ainsi, en une seule opération de découpe, le tenon 7 est réalisé avec les deux échancrures 8 et le perçage 22. Comme illustré à la figure 2, le perçage 22 est réalisé dans la seconde partie du tenon 7, dans l'axe médian longitudinal 9.

Dans le second mode de réalisation, le perçage 23 est réalisé dans la première tôle 1. Ici, afin de de permettre la réalisation de la mortaise 2 et du perçage 23 en une seule opération de découpe, le perçage 23 fait partie de la mortaise 2. Comme illustré à la figure 8, le perçage 23 est situé à une extrémité longitudinale de la mortaise 2 et il présente une largeur légèrement supérieure à la largeur de celle-ci.

Dans les deux modes de réalisation, la procédure d'assemblage est la suivante : dans un premier temps, les deux tôles 1, 5 sont associées l'une à l'autre en introduisant le tenon 7 dans la mortaise 2 ; dans un second temps la pièce de coincement 15 est disposé par rapport aux deux tôles 1, 5 de sorte que chaque coin de serrage 12 pénètre dans l'échancrure 8 qui lui est associé ; dans un troisième temps la vis 20 est introduite dans le perçage 22 et dans le logement 21, puis est vissée de façon à réaliser le taraudage du logement 21, le placage de la pièce de coincement 15 contre le tenon 7, et le serrage bord à bord des deux tôles 1, 5.

Concernant le premier mode de réalisation, les précisions suivantes peuvent être apportées. Dans le premier temps de la procédure d'assemblage, le tenon 7 est introduit dans la mortaise 2 jusqu'à ce que le champ 25 de la deuxième tôle 5 situé au niveau du tiret délimitant le corps 6 du tenon 7 vient en butée contre la surface intérieure 3 de la première tôle 1. De préférence, la section de passage du tenon 7 la plus importante est celle de la première partie du tenon 7 qui doit correspondre à la section de passage de la mortaise 2 de façon à permettre le passage du tenon 7 le plus juste et une immobilisation des deux tôles 1, 5 dans les deux directions perpendiculaires à la direction longitudinale de la seconde tôle 5. La longueur de la première partie du tenon 7 (prise dans le sens de la direction longitudinale de la seconde tôle 5) est telle que, quand les deux tôles 1, 5 sont en place, elle ne fait pas saillie hors de la mortaise 2 (la longueur de la première partie du tenon 7 est donc inférieure à l'épaisseur de la première tôle 1). Les deux échancrures 8 délimitent, dans la direction longitudinale du tenon 7, une partie intermédiaire située entre les première et seconde parties. Cette partie intermédiaire, bien qu'étant la partie mécaniquement la plus faible du tenon 7, présente une résistance mécanique suffisante pour éviter une déformation de ce dernier en usage normal. Dans le troisième temps de la procédure d'assemblage, la vis 20 est introduite par l'ouverture principale 17 qui est située à l'extérieur de l'enceinte. Le logement 21 dans laquelle est introduite la vis 20 est situé dans la seconde partie du tenon 7 et déborde légèrement dans la partie intermédiaire. Lors du vissage de la vis 20 dans le logement 21, les deux protubérances situées de chaque côté du logement 21 peuvent se rapprocher légèrement l'une de l'autre selon une déformation élastique, et, dans le cas où un effort très important est appliqué, ces deux protubérances peuvent se rapprocher jusqu'à appuyer sur le diamètre du fût 26 de la vis 20, ce qui augmente l'effort transmis en cas de rupture de la partie la plus faible du tenon 7. Des essais ont montré qu'en prenant deux tôles en acier S250 (la première tôle 1 ayant une épaisseur de 4 mm et la seconde tôle 5 ayant une épaisseur de 6 mm) et une pièce de coincement 15 moulée en alliage d'aluminium AS12, le serrage est efficace dans le domaine élastique à 25 000 Newtons. Enfin, la pièce de coincement 15 présente deux trous d'évidement 27, ce qui permet d'alléger la pièce de coincement 15 et sert également de petite équerre pour l'assemblage léger de deux tôles 1, 5 planes bord à bord, sans tenon mortaise.

Concernant le second mode de réalisation, les précisions suivantes peuvent être apportées. La première partie du tenon 7 comprend une encoche secondaire 28 qui débouche dans le champ 19 du tenon 7 et qui est conformée de façon à recevoir un bord supérieur de la mortaise 2, comme illustré aux figures 9 et 10. Dans le premier temps de la procédure d'assemblage, le tenon 7 dont la section de passage est inférieure à celle de la mortaise 2 (perçage 23 inclus) permet l'introduction du tenon 7 dans la mortaise 2 puis, par un mouvement de rotation de la deuxième tôle 5, la réception du bord supérieur de la mortaise 2 dans l'encoche secondaire 28. Dans le troisième temps de la procédure d'assemblage, la vis 20 est introduite dans le perçage 23 puis dans le logement 21 depuis l'intérieur de l'enceinte. Pendant le vissage de la vis 20 dans le logement 21, la pièce de coincement 15 est déplacée vers le haut de façon à être plaquée contre la surface extérieure 4 de la première tôle 1 et de façon à ce que l'encoche secondaire 28 reçoive de façon plaquée le bord supérieur de la mortaise 2.

## Revendications

1. Enceinte comprenant une première tôle (1) comportant une mortaise (2), et une seconde tôle (5) comportant un tenon (7) adapté à traverser la mortaise (2) de façon à maintenir les deux tôles (1, 5) perpendiculaires l'une à l'autre, **caractérisée en ce que** le tenon (7) présente une échancrure (8) qui est adjacente à une surface extérieure (4) de la première tôle (1) quand le tenon (7) traverse la mortaise (2), l'enceinte comprenant un coin de serrage (12) séparable des deux tôles (1, 5) et adapté à être disposé dans l'échancrure (8) de façon à serrer les deux tôles (1, 5) bord à bord du côté de l'intérieur de l'enceinte.

2. Enceinte selon la revendication 1, **caractérisée en ce que** le coin de serrage (12) comprend, d'une part, une surface d'appui avant (13) adaptée à prendre appui sur la surface extérieure (4) de la première tôle (1) et, d'autre part, une surface d'appui arrière (14) inclinée par rapport à la surface d'appui avant (13) et adaptée à prendre appui sur une paroi (11) délimitant l'échancrure (8), de sorte que, plus le coin de serrage (12) est introduit dans l'échancrure (8), plus les deux tôles (1, 5) sont jointes serrées.

3. Enceinte selon l'une des revendications 1 et 2, **caractérisée en ce que** le coin de serrage (12) fait partie d'une pièce de coincement (15) ayant une forme extérieure.

4. Enceinte selon la revendication 3, **caractérisée en ce que** la forme extérieure de la pièce de coincement (15) est configurée de façon à être disposée bord à bord avec la surface extérieure (4) de la première tôle (1) quand le coin de serrage (12) est disposé dans l'échancrure (8).

5. Enceinte selon l'une des revendications 3 et 4, **caractérisée en ce que** la forme extérieure de la pièce de coincement (15) est configurée de façon à recouvrir au moins une surface du tenon (7) quand le coin de serrage (12) est disposé dans l'échancrure (8).

6. Enceinte selon l'une des revendications 3 à 5, **caractérisée en ce que** la forme extérieure de la pièce de coincement (15) est configurée de façon à recouvrir le champ du tenon (7) quand le coin de serrage (12) est disposé dans l'échancrure (8).

7. Enceinte selon l'une des revendications 1 à 6, **caractérisée en ce qu'**elle comprend une vis (20) qui est adaptée, quand le coin de serrage (12) est disposé dans l'échancrure (8), à traverser l'une des deux tôles (1, 2) et à pénétrer dans un logement (21) solidaire du coin de serrage (12) de façon à immobiliser ce dernier aux deux tôles (1, 5).

8. Enceinte selon la revendication 7, **caractérisée en ce que** la vis (20) est une vis auto-formeuse (20) qui, lors de son vissage, est adaptée à réaliser un taraudage dans le logement (21) et à empêcher le retrait du coin de serrage (12) de l'échancrure (8).

9. Enceinte selon l'une des revendications 7 et 8, **caractérisée en ce que** la vis (20) est adaptée à traverser le tenon (7) et à être introduite dans le logement (21) par une ouverture principale (17) réalisée dans une pièce de coincement (15) qui porte le coin de serrage (12).

10. Enceinte selon l'une des revendications 7 et 8, **caractérisée en ce que** la vis (20) est adaptée à être introduite dans le logement (21) après avoir traversé un perçage (23) réalisé dans la première tôle (1).
